# EUROPÄISCHE PATENTANMELDUNG

(11) **EP 4 797 234 A1**
(43) Veröffentlichungstag der Anmeldung: **26.08.2026**
(21) Anmeldenummer: 26159618.3
(22) Anmeldetag: 19.02.2026
(51) Int. Cl.: G07F 17/20, G08G 1/017, G06F 21/62, B60S 3/04

(54) **FAHRZEUGIDENTIFIKATIONSVORRICHTUNG ZUR ERKENNUNG EINES FAHRZEUGS**

(30) Priorität: 19.02.2025 DE 202025100875 U
(71) Anmelder: Otto Christ AG, 87734 Benningen (DE)
(72) Erfinder: Spieß, Jonas, 87734 Benningen (DE); Christ, Markus, 87700 Memmingen (DE)
(74) Vertreter: ERNICKE Patent- und Rechtsanwälte PartmbB

(57) **Zusammenfassung**

Fahrzeugidentifikationsvorrichtung zur Erkennung eines Fahrzeugs (60) in einer Fahrzeugbehandlungsanlage (10), insbesondere in einer Fahrzeugwaschanlage, wobei die Fahrzeugidentifikationsvorrichtung (20) dazu ausgebildet ist, Fahrzeugidentifikationsdaten (FI) von einer Umfelderfassungsvorrichtung (15) der Fahrzeugbehandlungsanlage (10) zu beziehen und wobei die Fahrzeugidentifikationsvorrichtung (20) weiter dazu ausgebildet ist, die bezogenen Fahrzeugidentifikationsdaten (FI) zu anonymisieren und als Anonym-ID (ID) zu speichern und/oder auszugeben.

## Beschreibung

### Beschreibung

Die vorliegende Erfindung betrifft Fahrzeugbehandlungsanlagen, insbesondere Fahrzeugwaschanlagen, und die Identifikation von Fahrzeugen innerhalb solcher Anlagen.

Moderne Fahrzeugbehandlungsanlagen, insbesondere Fahrzeugwaschanlagen, können von einer effizienten und präzisen Erkennung von Fahrzeugen profitieren, um passgenaue Dienstleistungen anbieten zu können. Die Erfassung von Fahrzeugen spielt eine vorteilhafte Rolle, um den Behandlungsprozess zu optimieren und den Kundenbedürfnissen gerecht zu werden. Dabei ist es vorteilhaft, dass die Erfassung schnell und zuverlässig erfolgt, um den Durchsatz der Anlage nicht zu beeinträchtigen.

Bisher bekannte Fahrzeugidentifikationstechniken sind nicht optimal ausgebildet.

In der Praxis gibt es Vorschläge, durch eine kundenindividuelle Registrierung und Verträge einen noch besseren Service für Kunden anzubieten, die sich vor der Behandlung manuell identifizieren.

Traditionelle Methoden zur Kundenidentifizierung, wie manuelle Eingaben oder einfache Barcode-Scans, stoßen an ihre Grenzen, wenn es um schnelle Bearbeitung geht. Diese Methoden sind anfällig für Fehler. Zudem fehlt es an einer nahtlosen Integration und eindeutigen Zuordenbarkeit von historischen Daten. Diese Einschränkungen verdeutlichen den Bedarf einer verbesserten Lösung, die einen verbesserten Verarbeitungsprozess und mehr Kundennutzen bietet.

Aufgabe dieser Offenbarung ist es die Fahrzeugidentifikation zu verbessern. Die Lösung wird durch die Merkmale der eigenständigen Ansprüche definiert.

Die vorliegende Offenbarung betrifft eine Fahrzeugidentifikationsvorrichtung zur Erkennung eines Fahrzeugs in einer Fahrzeugbehandlungsanlage, insbesondere in einer Fahrzeugwaschanlage. Die Fahrzeugidentifikationsvorrichtung ist dazu ausgebildet, Fahrzeugidentifikationsdaten von einer Umfelderfassungsvorrichtung der Fahrzeugbehandlungsanlage zu beziehen. Die bezogenen Fahrzeugidentifikationsdaten werden anonymisiert. Die anonymisierten Daten werden als Anonym-ID gespeichert.

Eine Anonym-ID ist ein anonymer Identifikator (oder anonyme Kennung). Eine Anonym-ID ist insbesondere ein eindeutiger Code, wie eine Folge aus Zahlen, Buchstaben und/oder sonstigen computerlesbaren Zeichen. Eine Anonym-ID ist insbesondere ein eindeutiger Code, der einem Fahrzeug zugewiesen wird, ohne persönliche oder personen-zuodenbare Informationen wie Halter, Kennzeichen, Fahrgestellnummer oder dergleichen preiszugeben.

In einer bevorzugten Ausbildung werden Steuerdaten an eine Anlagensteuerung ausgegeben. Die Steuerdaten können auf der Anonym-ID basieren. Sie können fahrzeugindividuell erzeugt sein. Für die Erzeugung der Steuerdaten können historische Nutzungsdaten verwendet, insbesondere ausgewertet werden, die insbesondere zu derselben Anonym-ID vorliegen. Diese Lösung ermöglicht eine effiziente und datenschutzkonforme Erkennung von Fahrzeugen und die Generierung von individualisierten Steuerdaten auf Basis historischer Nutzungsdaten.

In einer alternativen oder zusätzlichen Ausführung kann die Fahrzeugidentifikationsvorrichtung dazu ausgebildet sein, die Anonym-ID mit zugeordneten Nutzungsdaten zu speichern und/oder auszugeben, insbesondere als eine Nutzungsreport-Nachricht an eine (bevorzugt entfernte / externe) Analyseeinrichtung zu versenden. Auf diese Weise können an einer Fahrzeugbehandlungsanlage erfasste Nutzungsdaten für eine (entfernte / externe) Speicherung und/oder Auswertung übermittelt werden. Die Nutzungsreport-Nachricht kann durch die Verwendung der Anonym-ID frei von personenbezogenen Daten und/oder in Hinblick auf den Datenschutz unbedenklich sein. Die Analyseeinrichtung kann eine Mehrzahl solcher Nutzungsreport-Nachrichten empfangen. Diese können eine Mehrzahl oder Vielzahl an unterschiedlichen und individuell erkannten Fahrzeugen betreffen, die über die Anonym-ID miteinander in Verbindung setzbar sein können. Die Nutzungsreport-Nachrichten können von einer oder von mehreren Fahrzeugbehandlungsanlagen stammen. So kann eine im Hinblick auf den Datenschutz unbedenkliche und standortübergreifende Analyse des Nutzungsverhaltens von Fahrzeugbehandlungsanlagen unterstützt werden, die beispielsweise auch das Wechseln eines Fahrzeugs zwischen zwei oder mehr Fahrzeugbehandlungsanlagen auswertbar macht. Die Analyse des Nutzungsverhaltens kann somit über den Datenbestand an Nutzungsdaten an einer einzelnen Fahrzeugbehandlungsanlage hinaus erweitert werden, was deutlich komplexere Analysen ermöglicht.

Durch eine (erste) Anlagenschnittstelle können Fahrzeugidentifikationsdaten effizient und sicher an die Fahrzeugidentifikationsvorrichtung übermittelt werden. Dies verbessert die Genauigkeit und Zuverlässigkeit der Fahrzeugerkennung, da die Daten in Echtzeit verarbeitet und weitergeleitet werden können.

Die (erste) Anlagenschnittstelle trägt zur Modularität und Skalierbarkeit der Fahrzeugidentifikationsvorrichtung bei. Sie ermöglicht es, die Vorrichtung leicht in bestehende Anlagen zu integrieren oder zukünftige Erweiterungen und Upgrades vorzunehmen, ohne die gesamte Systemarchitektur ändern zu müssen. Dies führt zu einer längeren Lebensdauer der Anlage und reduziert die Gesamtkosten für Wartung und Upgrades.

Fahrzeugidentifikationsdaten können insbesondere durch eine Umwandlung von Sensordaten in Fahrzeugidentifikationsdaten, vorzugsweise mit Hilfe einer Erkennungseinheit erzeugt werden.

Die Fahrzeugidentifikationsvorrichtung kann bevorzugt mindestens eine Speichereinheit zum Speichern einer Anonym-ID aufweisen. Diese technische Ausgestaltung ermöglicht die sichere und effiziente Speicherung der anonymisierten Fahrzeugidentifikationsdaten.

Durch die Speichereinheit kann eine Anonym-ID dauerhaft oder temporär gespeichert werden, was eine spätere Nutzung und/oder Analyse der Daten ermöglicht. Dies ist vorteilhaft für die Generierung von (Fahrzeug-) individualisierten Nutzungsdaten und/oder Steuerdaten auf Basis historischer Nutzungsdaten.

Die Speichereinheit trägt zur Verbesserung des Datenschutzes bei, da die Daten, die eine Fahrzeugidentifikation umfassen in anonymisierter Form gespeichert werden, insbesondere ausschließlich in anonymisierter Form gespeichert werden. Dies reduziert das Risiko eines Missbrauchs personenbezogener Daten und unterstützt die Einhaltung von Datenschutzbestimmungen. Bevorzugt kann die Speicherung der Fahrzeugidentifikationsdaten in ihrer ursprünglich erfassten Form oder in einer Form mit einer Personenzuordnung in nicht-anonymer Form ausgeschlossen sein oder von der Eingabe einer Nutzerzustimmung abhängig sein.

Die Integration der Speichereinheit in die Fahrzeugidentifikationsvorrichtung ermöglicht eine nahtlose Speicherung und/oder Verwaltung der Anonym-IDs. Dies verbessert die Effizienz und Zuverlässigkeit des gesamten Systems, da die Daten schnell und sicher abgerufen und verarbeitet werden können.

Die Speichereinheit kann lokal in der Fahrzeugbehandlungsanlage und/oder zentral in einem Netzwerk mehrerer Anlagen angeordnet sein. Dies bietet Flexibilität bei der Implementierung und ermöglicht eine skalierbare Lösung, die an die spezifischen Anforderungen der jeweiligen Anlage angepasst werden kann.

Die Fahrzeugidentifikationsvorrichtung weist bevorzugt eine (zweite) Anlagenschnittstelle auf, welche dazu ausgebildet ist, Steuerdaten auszugeben und/oder zu beziehen. Diese technische Ausgestaltung ermöglicht eine flexible und erweiterbare Kommunikation zwischen der Fahrzeugidentifikationsvorrichtung und anderen Systemkomponenten der Fahrzeugbehandlungsanlage. Die zweite Anlagenschnittstelle kann separat vorliegen oder mit der ersten Anlagenschnittstelle kombiniert werden oder identisch sein.

Durch die (zweite) Anlagenschnittstelle können Steuerdaten effizient und sicher an die Anlagensteuerung übermittelt werden. Dies verbessert die Genauigkeit und Zuverlässigkeit der Fahrzeugbehandlung, da die Steuerdaten in Echtzeit verarbeitet und umgesetzt werden können.

Die (zweite) Anlagenschnittstelle kann alternativ oder zusätzlich dazu ausgebildet sein, eine Steuerdaten-Empfehlung zu beziehen, insbesondere von einer (externen / entfernten) Analyseeinrichtung.

Die Möglichkeit, Steuerdaten sowohl auszugeben als auch zu beziehen, ermöglicht eine bidirektionale Kommunikation. Dies bedeutet, dass die Fahrzeugidentifikationsvorrichtung nicht nur Steuerdaten an die Anlagensteuerung senden kann, sondern auch Steuerdaten oder andere Informationen von anderen Systemen innerhalb der Fahrzeugbehandlungsanlage empfangen kann. Dies ist besonders nützlich für die Integration in komplexe Anlagensteuerungssysteme, die auf präzise und aktuelle Daten angewiesen sind. Solche anderen Informationen können insbesondere Zeit- oder Ortsdaten sein. Die ausgegebenen Steuerdaten und/oder empfangene Steuerdaten können Bestandteil von Nutzungsdaten sein, die insbesondere in Bezug auf eine bestimmte Fahrzeugbehandlung erfassbar / speicherbar / versendbar sind.

Die (zweite) Anlagenschnittstelle trägt zur Modularität und Skalierbarkeit der Fahrzeugidentifikationsvorrichtung bei. Sie ermöglicht es, die Vorrichtung leicht in bestehende Anlagen zu integrieren oder zukünftige Erweiterungen und Upgrades vorzunehmen, ohne die gesamte Systemarchitektur ändern zu müssen. Dies führt zu einer längeren Lebensdauer der Anlage und reduziert die Gesamtkosten für Wartung und Upgrades.

Die Fahrzeugidentifikationsvorrichtung kann bevorzugt auf Basis einer Anonym-ID (für ein zu behandelndes Fahrzeug) eine Anfragenachricht mit der Anonym-ID an eine Analyseeinrichtung versenden. Die Analyseeinrichtung kann lokal (am Ort der Fahrzeugbehandlungsanlage) vorliegen. Sie kann alternativ eine externe, insbesondere eine entfernte Analyseeinrichtung sein. Die Fahrzeugidentifikationsvorrichtung kann insbesondere in Antwort auf die Anfragenachricht eine Empfehlungsnachricht und/oder eine Analyseergebnis-Nachricht empfangen. Bevorzugt können ein oder mehrere Schritte der Auswertung und/oder Analyse von Nutzungsdaten entfernt ausgeführt werden, insbesondere an einer zentralen Analyseeinrichtung, die mit einer Mehrzahl von Fahrzeugbehandlungsanlagen oder Fahrzeugidentifikationsvorrichtungen kommuniziert. Bevorzugt können ein oder mehrere Schritte der Erzeugung von (fahrzeugindividuellen) Steuerdaten-Empfehlungen und/oder Steuerdaten entfernt ausgeführt werden, insbesondere an einer zentralen Analyseeinrichtung, die mit einer Mehrzahl von Fahrzeugbehandlungsanlagen oder Fahrzeugidentifikationsvorrichtungen kommuniziert. Ein Ergebnis oder Teil-Ergebnis einer Nutzungsdaten-Analyse und/oder einer Erzeugung einer Steuerdaten-Empfehlung kann an einer Fahrzeugbehandlungsanlage oder einer Fahrzeugidentifikationsvorrichtung für ein zu behandelndes Fahrzeug empfangen werden und bevorzugt zu konkreten Durchführung einer Fahrzeugbehandlung berücksichtigt oder umgesetzt werden.

Eine Analyseergebnis-Nachricht umfasst bevorzugt ein Analyseergebnis, welches ein Nutzungsverhalten in Bezug auf eine zuvor mit einer Anfragenachricht versendete Anonym-ID kennzeichnet. Die Fahrzeugidentifikationsvorrichtung kann bevorzugt Steuerdaten auf Basis des (empfangenen) Analyseergebnisses ausgeben.

Eine Anfragenachricht kann eine beliebige Struktur haben. Sie umfasst bevorzugt eine bestimmte Anonym-ID für ein zu behandelndes Fahrzeug. Die Anfragenachricht kann die versendende Fahrzeugbehandlungsanlage und/oder Fahrzeugidentifikationsvorrichtung benennen, beispielsweise auf Basis einer Anlagen-ID. Eine Anfragenachricht kann eine Anfrage für eine Steuerdaten-Empfehlung und/oder eine Anfrage für ein Analyseergebnis umfassen. Alternativ oder zusätzlich können weitere Anfrageinhalte umfasst sein, beispielsweise ob die Anonym-ID vorbekannt ist.

Die Fahrzeugidentifikationsvorrichtung erfasst bevorzugt Fahrzeugidentifikationsdaten, die mindestens ein sensorisch erfassbares Merkmal umfassen. Die erfassten Merkmale können von beliebiger Art und Anzahl sein. Diese technische Ausgestaltung gewährleistet eine präzise und zuverlässige Identifikation der Fahrzeuge. Die erfassten Merkmale können mindestens eines der folgenden spezifischen Merkmale umfassen: Kennzeichen, Fahrgestellnummer und/oder ein ID-Code.

Durch die Erfassung mindestens eines solcher spezifischen Merkmale wird die Genauigkeit der Fahrzeugerkennung erhöht, was zu einer verbesserten Effizienz der Fahrzeugbehandlungsanlage führt.

Die Möglichkeit, verschiedene sensorisch erfassbare Merkmale zu nutzen, bietet Flexibilität bei der Implementierung der Fahrzeugidentifikationsvorrichtung. Dies ermöglicht die Anpassung an unterschiedliche Anforderungen und Bedingungen innerhalb der Fahrzeugbehandlungsanlage sowie etwaig an unterschiedliche Verfügbarkeiten von Fahrzeugidentifikationsdaten in unterschiedlichen Ländern. Weiterhin können Zustandsänderungen in der Zuordnung von Fahrzeug und Benutzer, beispielsweise ein Verkauf eines Fahrzeugs, gehandhabt werden. Eine solche Zuordnung kann auf beliebige Weise erfasst und mit einer vorbekannten Zuordnung verglichen werden, indem beispielsweise eine neue Anonym-ID vergeben wird, wenn für eine bestimmte (vorbekannte) Fahrgestellnummer ein anderes (neu vergebenes) Kennzeichen erfasst wird. Die Vergabe einer neuen Anonym-ID kann vorteilhaft sein für die Einhaltung von Anforderungen des Datenschutzes

Die präzise Erfassung und/oder Unterscheidung der Fahrzeuge trägt zur Verbesserung der Kundenzufriedenheit bei, da die Fahrzeuge individuell erkannt und behandelt werden können. Dies reduziert Fehler und stellt sicher, dass die Kunden die gewünschten Dienstleistungen erhalten.

Die Fahrzeugidentifikationsvorrichtung kann eine Anonym-ID auf beliebige Weise erzeugen. Eine bevorzugte Ausgestaltung ist die Erzeugung eines Hash-Werts. Diese technische Ausgestaltung gewährleistet eine sichere und datenschutzkonforme Anonymisierung der Fahrzeugidentifikationsdaten. In die Erzeugung des Hash-Werts können eine oder mehrere der erfassten Fahrzeugidentifikationsdaten einbezogen werden, beispielsweise eine Fahrgestellnummer und/oder ein Kennzeichen und/oder ein ausgesendeter Code.

Durch die Erzeugung eines Hash-Werts werden die Fahrzeugidentifikationsdaten in eine Form umgewandelt, die keine Rückschlüsse auf personenbezogene Daten zulässt. Dies verbessert den Datenschutz und reduziert das Risiko eines Missbrauchs der Daten.

Die Verwendung eines Hash-Werts zur Anonymisierung bietet eine hohe Sicherheit, da die ursprünglichen Fahrzeugidentifikationsdaten aus dem Hash-Wert nicht wiederhergestellt werden können. Dies ist besonders vorteilhaft, um die Einhaltung von Datenschutzbestimmungen zu gewährleisten und das Vertrauen der Kunden zu stärken. Andererseits wird aus einem bestimmten Fahrzeugidentifikationsdatenelement auch bei mehrmaliger/erneuter Erkennung stets der gleiche Hash-Wert erzeugt.

Die Erzeugung der Anonym-ID durch einen Hash-Wert ermöglicht eine effiziente und/oder schnelle Verarbeitung der Daten. Dies trägt zur Verbesserung der Gesamtleistung der Fahrzeugidentifikationsvorrichtung bei, da die Anonymisierung in Echtzeit erfolgen kann.

Die Verwendung eines Hash-Werts bietet zudem Flexibilität bei der Implementierung der Fahrzeugidentifikationsvorrichtung. Es können genau ein oder verschiedene Hash-Algorithmen verwendet werden. Die Auswahl und Anzahl der verwendeten Hash-Algorithmen kann festgelegt werden, um den spezifischen Anforderungen und Sicherheitsstandards gerecht zu werden.

Eine Anonym-ID kann alternativ oder zusätzlich durch Anwendung einer Verschlüsselung erzeugt werden. Die Verschlüsselung kann zusätzlich zur Bildung eines Hash-Werts erfolgen. Durch eine Verschlüsselung kann der Versand von Nachrichten, insbesondere von Nutzungsreport-Nachrichten und/oder Anfragenachrichten und/oder Empfehlungsnachrichten abgesichert werden, bspw. gegen ein Abhören durch Dritte oder gegen den manipulativen Eintrag von Fremdnachrichten. Eine Fahrzeugbehandlungsanlage kann durch eine Anlagen-ID identifizierbar sein Die Anlagen-ID kann zur zweifelsfreien Bestimmung eines Empfängers oder Senders einer Nachricht dienen. Sie kann alternativ oder zusätzlich dazu dienen, ein Nutzungsdaten mit Bezug auf eine bestimmte Fahrzeugbehandlungsanlage zu speichern und/oder auszuwerten und/oder abzugleichen.

Die Fahrzeugidentifikationsvorrichtung ermöglicht einen Abgleich der erzeugten Anonym-ID mit mindestens einer vorbekannten, insbesondere bereits gespeicherten Anonym-ID. Diese technische Ausgestaltung gewährleistet eine präzise und zuverlässige Identifikation von wiederkehrenden Fahrzeugen, d.h. Fahrzeugen, die ach einer erstmaligen Identifikation erneut einer Erfassung und Fahrzeugidentifikation unterliegen. Mit anderen Worten wird die Wiedererkennung von Fahrzeugen ermöglicht, und zwar bevorzugt an derselben Fahrzeugbehandlungsanlage und/oder an mehreren unterschiedlichen Fahrzeugbehandlungsanlagen.

Durch den Abgleich der Anonym-ID können historische Nutzungsdaten effizient genutzt werden, um personalisierte Steuerdaten zu generieren. Die historischen Nutzungsdaten können von derselben Fahrzeugbehandlungsanlage stammen und/oder von unterschiedlichen Fahrzeugbehandlungsanlagen. Dies ermöglicht es, ein spezifisches Behandlungsprogramm für ein wiederkehrendes Fahrzeug automatisch abzurufen und anzuwenden, was die Effizienz und Kundenzufriedenheit erhöht - und zwar bevorzugt unabhängig vom Betreiber und/oder Standort einer bestimmten Fahrzeugbehandlungsanlage.

Die Steuerdaten können eine beliebige Ausbildung und Zusammensetzung haben. Die Steuerdaten umfassen bevorzugt individuelle Konfigurationen der Fahrzeugbehandlungsanlage, insbesondere Daten zu bestimmten (ausgewählten) Waschprogrammen und/oder Preisen und/oder Rabattaktionen.

Der Abgleich einer momentan erzeugten Anonym-ID mit mindestens einer vorbekannten / gespeicherten Anonym-ID trägt zur Verbesserung der Genauigkeit und Zuverlässigkeit der Fahrzeugerkennung bei, da bekannte Fahrzeuge schnell und sicher erneut identifiziert werden können. Dies reduziert die Notwendigkeit manueller Eingaben und minimiert Fehler. Die vorbekannte Anonym-ID kann dabei lokal oder entfernt gespeichert sein. Der Abgleich kann über den Versand von Nachrichten, insbesondere von einer Nutzungsreport-Nachricht und/oder eine Anfragenachricht und/oder eine Empfehlungsnachricht erfolgen. Weiterhin kann ein Analyseergebnis angefragt / versendet werden.

Die Möglichkeit, eine neu/momentan erfasste Anonym-ID mit mindestens einer bereits gespeicherten Anonym-ID abzugleichen, unterstützt die Einhaltung von Datenschutzbestimmungen, da die Identifikation der Fahrzeuge ohne die Verwendung personenbezogener Daten erfolgt. Dies stärkt das Vertrauen der Kunden in die datenschutzkonforme Verarbeitung ihrer Fahrzeugdaten.

Die Integration dieser Funktion in die Fahrzeugidentifikationsvorrichtung ermöglicht eine nahtlose und effiziente Verwaltung mindestens einer Anonym-ID und der zugehörigen Nutzungsdaten. Dies trägt zur Optimierung des gesamten Behandlungsprozesses in der Fahrzeugbehandlungsanlage bei.

Die erfassten Daten einer oder mehrerer Fahrzeugbehandlungsanlagen können genutzt werden, um ein nach Fahrzeugen verfolgbares / zuordenbares Nutzungsverhalten zu analysieren. Die Analyse kann zu einem beliebigen Zweck erfolgen, beispielsweise um Angebote und/oder Öffnungszeiten und/oder die Preisgestaltung zu optimieren. Alternativ oder zusätzlich kann einem wiederkehrenden Kunden (Fahrzeug) eine bestimmte individualisierte Behandlung angeboten werden, für die er keinerlei eigene Auswahl treffen muss, bspw. die Wiederholung der zuletzt ausgewählten Fahrzeugbehandlung.

Die Integration dieser Funktion in die Fahrzeugidentifikationsvorrichtung unterstützt die Einhaltung von Datenschutzbestimmungen, da die Generierung der Steuerdaten auf der Basis anonymisierter Daten erfolgt. Dies stärkt das Vertrauen der Kunden in die datenschutzkonforme Verarbeitung ihrer Fahrzeugdaten.

Durch die Verknüpfung und/oder den Abgleich der Anonym-ID mit historischen Nutzungsdaten können individualisierte oder auch personalisierte Steuerdaten generiert werden, die auf den bisherigen Nutzungsgewohnheiten und Präferenzen basieren, die zu einem Fahrzeug erfasst worden sind. Dies ermöglicht es, spezifische Behandlungsprogramme für wiederkehrende Fahrzeuge automatisch abzurufen und anzuwenden, was die Effizienz und Kundenzufriedenheit erhöht.

Die Beziehung und insbesondere individuelle Zuordenbarkeit zwischen einer Anonym-ID und historischen Nutzungsdaten trägt zur Verbesserung der Genauigkeit und Zuverlässigkeit der Fahrzeugerkennung bei, da die Daten kontinuierlich aktualisiert und genutzt werden können. Dies reduziert die Notwendigkeit manueller Eingaben und minimiert Fehler.

Die Möglichkeit, eine Anonym-ID mit historischen Nutzungsdaten in Beziehung zu setzen, unterstützt die Einhaltung von Datenschutzbestimmungen, da die Identifikation der Fahrzeuge ohne die Verwendung personenbezogener Daten erfolgt. Dies stärkt das Vertrauen der Kunden in die datenschutzkonforme Verarbeitung ihrer Fahrzeugdaten.

Die Integration dieser Funktion in die Fahrzeugidentifikationsvorrichtung ermöglicht eine nahtlose und effiziente Verwaltung der Anonym-ID und der zugehörigen Nutzungsdaten. Dies trägt zur Optimierung des gesamten Behandlungsprozesses in der Fahrzeugbehandlungsanlage bei.

Die Fahrzeugidentifikationsvorrichtung ermöglicht bevorzugt die Erzeugung von Steuerdaten auf Basis eines Abgleichs einer neu oder momentan erfassten Anonym-ID mit historischen Nutzungsdaten, die insbesondere zu einer gespeicherten Anonym-ID zugeordnet sind. Diese technische Ausgestaltung gewährleistet eine personalisierte und effiziente Fahrzeugbehandlung.

Durch den Abgleich der Anonym-ID mit den gespeicherten historischen Nutzungsdaten können spezifische Steuerdaten generiert werden, die auf den bisherigen Nutzungsgewohnheiten und Präferenzen basieren die zu einem Fahrzeug erfasst worden sind. Dies ermöglicht es, für wiederkehrende Fahrzeuge automatisch die bevorzugten Behandlungsprogramme abzurufen und anzuwenden, was die Effizienz und die Kundenzufriedenheit erhöht.

Die Erzeugung von Steuerdaten auf Basis historischer Nutzungsdaten trägt zur Verbesserung der Genauigkeit und Zuverlässigkeit der Fahrzeugbehandlung bei, da die Daten kontinuierlich aktualisiert und genutzt werden können. Dies reduziert die Notwendigkeit manueller Eingaben und minimiert Fehler.

Die Möglichkeit, Steuerdaten auf Basis eines Abgleichs der Anonym-ID mit historischen Nutzungsdaten zu erzeugen, unterstützt die Einhaltung von Datenschutzbestimmungen, da die Identifikation der Fahrzeuge ohne die Verwendung personenbezogener Daten erfolgt. Dies stärkt das Vertrauen der Kunden in die datenschutzkonforme Verarbeitung ihrer Fahrzeugdaten.

Die Integration dieser Funktion in die Fahrzeugidentifikationsvorrichtung ermöglicht eine nahtlose und effiziente Verwaltung der Steuerdaten und der zugehörigen Nutzungsdaten. Dies trägt zur Optimierung des gesamten Behandlungsprozesses in der Fahrzeugbehandlungsanlage bei.

Die Fahrzeugidentifikationsvorrichtung ermöglicht die fahrzeugindividuelle Ausgabe von Steuerdaten. Diese technische Ausgestaltung gewährleistet eine maßgeschneiderte und effiziente Fahrzeugbehandlung.

Durch die fahrzeugindividuelle Ausgabe von Steuerdaten können spezifische Behandlungsprogramme für jedes Fahrzeug generiert werden, die beispielsweise auf den individuellen Nutzungsgewohnheiten und Präferenzen basieren. Dies ermöglicht es, für jedes Fahrzeug automatisch die bevorzugten Behandlungsprogramme abzurufen und anzuwenden, was die Effizienz und Kundenzufriedenheit erhöht.

Die Möglichkeit standortbezogen und/oder standortübergreifend das Nutzungsverhalten auszuwerten, schafft die Möglichkeit die Strukturen der Fahrzeugbehandlungsanlagen zu optimieren und anzupassen. Dies trägt zu einer besseren Auslastung und/oder einer höheren Kundenzufriedenheit bei.

Die fahrzeugindividuelle Ausgabe von Steuerdaten trägt zur Verbesserung der Genauigkeit und Zuverlässigkeit der Fahrzeugbehandlung bei. Die Nutzungsdaten können kontinuierlich aktualisiert und genutzt werden. Dies reduziert die Notwendigkeit manueller Eingaben und minimiert Fehler.

Die Möglichkeit, Steuerdaten fahrzeugindividuell auf Basis einer Anonym-ID auszugeben, unterstützt die Einhaltung von Datenschutzbestimmungen, da die Identifikation der Fahrzeuge ohne die Verwendung personenbezogener Daten erfolgt. Dies stärkt das Vertrauen der Kunden in die datenschutzkonforme Verarbeitung ihrer Fahrzeugdaten.

Die Integration dieser Funktion in die Fahrzeugidentifikationsvorrichtung ermöglicht eine nahtlose und effiziente Verwaltung der Steuerdaten und der zugehörigen Nutzungsdaten. Dies trägt zur Optimierung des gesamten Behandlungsprozesses in der Fahrzeugbehandlungsanlage bei.

Die Fahrzeugidentifikationsvorrichtung ist dazu ausgebildet, Fahrzeugidentifikationsdaten von einer Umfelderfassungsvorrichtung zu beziehen. Diese technische Ausgestaltung gewährleistet eine präzise und zuverlässige Erfassung der Fahrzeugidentifikationsdaten.

Die Möglichkeit, Fahrzeugidentifikationsdaten von einer Umfelderfassungsvorrichtung zu beziehen, bietet Flexibilität bei der Implementierung der Fahrzeugidentifikationsvorrichtung. Dies ermöglicht die Anpassung an unterschiedliche Anforderungen und Bedingungen innerhalb der Fahrzeugbehandlungsanlage und sich etwaig neu ergebende Sensortechniken.

Die Erfassung der Fahrzeugidentifikationsdaten durch die Umfelderfassungsvorrichtung trägt zur Verbesserung der Kundenzufriedenheit bei, da die Fahrzeuge individuell erkannt und behandelt werden können. Dies reduziert Fehler und stellt sicher, dass die Kunden die gewünschten Dienstleistungen erhalten. Die Fahrzeugidentifikation kann unabhängig von manuellen Eingaben und ohne Kenntnis des konkreten Nutzens erfolgen.

Die Integration der Umfelderfassungsvorrichtung in die Fahrzeugidentifikationsvorrichtung ermöglicht eine nahtlose Kommunikation und Datenverarbeitung. Dies trägt zur Optimierung des gesamten Behandlungsprozesses in der Fahrzeugbehandlungsanlage bei und gewährleistet eine hohe Effizienz und Zuverlässigkeit.

Die Fahrzeugbehandlungsanlage, gemäß der vorliegenden Offenbarung, umfasst eine Anlagensteuerung, eine offenbarungsgemäße Fahrzeugidentifikationsvorrichtung und eine Umfelderfassungsvorrichtung. Diese technische Ausgestaltung ermöglicht eine präzise und effiziente Erkennung und Behandlung von Fahrzeugen.

Die Integration der Fahrzeugidentifikationsvorrichtung in die Fahrzeugbehandlungsanlage ermöglicht eine nahtlose Kommunikation zwischen den verschiedenen Komponenten der Anlage. Die Umfelderfassungsvorrichtung erfasst die Fahrzeugidentifikationsdaten, die dann von der Fahrzeugidentifikationsvorrichtung anonymisiert und als Anonym-ID gespeichert werden. Die Anlagensteuerung empfängt die generierten Steuerdaten und verarbeitet sie, um personalisierte Dienstleistungen anzubieten.

Durch die Kombination dieser Komponenten wird die Genauigkeit und Zuverlässigkeit der Fahrzeugerkennung und -behandlung verbessert. Die Umfelderfassungsvorrichtung sorgt für eine präzise Erfassung der Fahrzeugidentifikationsdaten, während die Fahrzeugidentifikationsvorrichtung die Daten anonymisiert und speichert. Die Anlagensteuerung nutzt die Steuerdaten, um den Behandlungsprozess zu optimieren und den Kundenbedürfnissen gerecht zu werden.

Die Fahrzeugbehandlungsanlage bietet Flexibilität bei der Implementierung und ermöglicht eine skalierbare Lösung, die an die spezifischen Anforderungen der jeweiligen Anlage angepasst werden kann. Dies führt zu einer längeren Lebensdauer der Anlage und reduziert die Gesamtkosten für Wartung und Upgrades.

Die Einhaltung von Datenschutzbestimmungen wird durch die Anonymisierung der Fahrzeugidentifikationsdaten gewährleistet. Dies stärkt das Vertrauen der Kunden in die datenschutzkonforme Verarbeitung ihrer Fahrzeugdaten und erhöht die Kundenzufriedenheit durch individualisierte und effiziente Dienstleistungen.

Ein Softwareprodukt gemäß der vorliegenden Offenbarung, insbesondere gespeichert auf einem Datenträger und/oder kommuniziert über eine Datenschnittstelle, umfasst Anweisungen, die dazu ausgebildet sind, eine Datenverarbeitungseinrichtung dazu zu veranlassen, ein Fahrzeugidentifikationsverfahren mit den folgenden Schritten auszuführen:
Beziehen von Fahrzeugidentifikationsdaten von einer
Umfelderfassungsvorrichtung
Anonymisieren der bezogenen Fahrzeugidentifikationsdaten durch Erzeugung einer Anonym-ID
Bevorzugt speichern der Anonym-ID
Ausgeben von Steuerdaten an die Anlagensteuerung in Abhängigkeit von der Anonym-ID

Das Fahrzeugidentifikationsverfahren ist ein eigenständiger Aspekt der Offenbarung. Es kann auch unabhängig von dem Software-Produkt und/oder der Datenverarbeitungseinrichtung vorliegen oder durch andere Mittel implementiert sein.

Das Fahrzeugidentifikationsverfahren kann weiterhin den Schritt umfassen: Versenden einer Anfragenachricht mit der Anonym-ID, insbesondere an eine (externe / entfernte) Analyseeinrichtung.

Das Fahrzeugidentifikationsverfahren kann weiterhin den Schritt umfassen: Empfangen einer Empfehlungsnachricht und/oder Empfangen einer Analyseergebnis-Nachricht. Die Steuerdaten können auf Basis der empfangenen Empfehlungsnachricht und/oder Analyseergebnis-Nachricht erzeugt und/oder ausgegeben werden.

Das Fahrzeugidentifikationsverfahren kann weiterhin den Schritt umfassen: Versenden einer Nutzungsreport-Nachricht.

Das Fahrzeugidentifikationsverfahren ermöglicht eine effiziente und datenschutzkonforme Erkennung von Fahrzeugen sowie die Generierung und Ausgabe von personalisierten Steuerdaten.

Durch das Beziehen der Fahrzeugidentifikationsdaten von einer Umfelderfassungsvorrichtung wird eine präzise und zuverlässige Erfassung der Fahrzeugdaten gewährleistet. Dies erhöht die Genauigkeit der Fahrzeugerkennung und ermöglicht eine effiziente Verarbeitung der Daten.

Die Anonymisierung der Fahrzeugidentifikationsdaten durch Erzeugung einer Anonym-ID gewährleistet den Schutz personenbezogener Daten und unterstützt die Einhaltung von Datenschutzbestimmungen. Dies stärkt das Vertrauen der Kunden in die datenschutzkonforme Verarbeitung ihrer Fahrzeugdaten.

Das Speichern der Anonym-ID ermöglicht eine spätere Nutzung und/oder Analyse von Daten, die zu einem aktuellen Behandlungsvorgang erhoben werden. Solche Daten können einer momentan erzeugten Anonym-ID zugeordnet und gespeichert werden. Wenn die Anonym-ID bei einem zukünftigen Behandlungsvorgang erneut erfasst/erzeugt oder auf andere Weise wiedererkannt wird, können zugeordnete Daten teilweise oder vollständig als historische Nutzungsdaten zur Verfügung gestellt sein. Dies kann was vorteilhaft für die Generierung solcher individualisierten Steuerdaten auf Basis historischer Nutzungsdaten sein. Dies trägt zur Verbesserung der Effizienz und Kundenzufriedenheit bei.

Die Speicherung der Anonym-ID ermöglicht eine, insbesondere standortübergreifende, Analyse des Nutzungsverhaltens. Aus der Analyse des Nutzungsverhaltens können Optimierungen für eine Fahrzeugbehandlungsanlage oder eine Gruppe von Fahrzeugbehandlungsanlagen resultieren.

Die Ausgabe von Steuerdaten an die Anlagensteuerung ermöglicht eine individualisierte Behandlung der Fahrzeuge. Basierend auf den historischen Nutzungsdaten können spezifische Steuerdaten generiert werden, die beispielsweise ein bevorzugtes Waschprogramm für ein bestimmtes Fahrzeug umfassen. Dies verbessert die Kundenzufriedenheit, da wiederkehrende Kunden oder Fahrzeuge automatisch ihre bevorzugten Dienstleistungen erhalten, ohne dass diese jedes Mal neu angeben oder ausgewählt werden müssen.

Die (erste) und (zweite) Anlagenschnittstelle kann als eine einzige, eine kombinierte oder als zwei separate Schnittstellen ausgestaltet sein.

Eine Analyseeinrichtung zur Untersuchung des Nutzungsverhaltens an mindestens einer Fahrzeugbehandlungsanlage umfasst vorzugsweise eine Datenverarbeitungseinrichtung, die insbesondere zur Erfassung und Auswertung von Nutzungsdaten ausgebildet ist. Die von der Analyseeinrichtung ausgeführten Schritte können als ein bevorzugt computerimplementiertes Analyseverfahren ausgeführt sein. Alle nachfolgenden Erläuterungen betreffen somit in gleicher Weise eine Analyseeinrichtung wie auch ein Analyseverfahren.

Die Analyseeinrichtung ist dazu vorgesehen und ausgebildet, mindestens eine Nutzungsreport-Nachricht zu empfangen, die insbesondere eine Anonym-ID sowie die dieser ID zugeordneten Nutzungsdaten enthält.

Die empfangenen Daten werden mit historischen Nutzungsdaten in Beziehung gesetzt.

Diese Nutzungsdaten können einen beliebigen geeigneten Inhalt haben. Sie umfassen bevorzugt Ortsangaben, Zeitangaben, Angaben zur angefragten Leistung, Angaben zum Preis und/oder eine Anonym-ID. Es kann insbesondere ein Abgleich mit historischen Daten erfolgen, die einer bereits bekannten Anonym-ID zugeordnet sind, vorzugsweise derselben Anonym-ID. Die Nutzungsdaten können teilweise oder vollständig einer bestimmten Anonym-ID zugeordnet sein.

Auf Basis einer Datenanalyse wird ein Analyseergebnis generiert, das ein fahrzeugindividuelles Nutzungsverhalten beschreibt.

Die Analyse kann sich speziell auf eine oder mehrere Anonym-IDs beziehen. Die Analyse kann weiterhin Aspekte eines Nutzungsverhaltens betreffen, die unabhängig von einer Anonym-ID sind, wie beispielsweise eine (momentane) Auslastung der Fahrzeugbehandlungsanlage, Fehlerzustände, Füllstände von Betriebsmitteln oder Umgebungsbedingungen wie Wetterdaten, Kalenderinformationen (Ferien, Feiertage, Hochfrequenz-Ursachen wie Messen).

Die Analyseeinrichtung kann so ausgestaltet sein, dass sie auf eine eingehende Anfragenachricht mit einer Anonym-ID reagiert. Die Reaktion kann auf beliebige Weise erfolgen.

Auf Basis einer Auswertung der Nutzungsdaten kann ein Analyseergebnis über ein fahrzeugindividuelles Nutzungsverhalten ermittelt und/oder ausgegeben werden, insbesondere in Bezug auf mindestens eine Anonym-ID, weiter bevorzugt in Bezug auf eine im Rahmen einer Anfragenachricht empfangene Anonym-ID.

Alternativ oder zusätzlich kann auf Basis der empfangenen Anonym-ID und bevorzugt der gespeicherten historischen Nutzungsdaten eine Steuerdaten-Empfehlung ermittelt werden.

Die Steuerdaten-Empfehlung kann sich insbesondere auf historische Daten beziehen, die mindestens einer vorbekannten Anonym-ID zugeordnet sind, weiter bevorzugt zumindest anteilig derselben Anonym-ID, für die eine Anfragenachricht empfangen wurde. Die Empfehlungsnachricht enthält vorzugsweise die ermittelte Steuerdaten-Empfehlung.

Es kann eine Analyseergebnis-Nachricht versendet werden.

Die Analyseeinrichtung kann Nutzungsdaten und Anonym-IDs von verschiedenen Standorten beziehen und auswerten. Insbesondere ermöglicht sie es, diese Daten in Beziehung zu setzen, sodass eine umfassende Analyse über mehrere Standorte hinweg erfolgen kann. Dadurch können standortübergreifende Nutzungsverhalten erkannt und entsprechende Steuerungsmaßnahmen abgeleitet werden.

Die Analyseeinrichtung kann innerhalb oder außerhalb der Fahrzeugbehandlungsanlage angeordnet sein, insbesondere innerhalb der Fahrzeugidentifikationsvorrichtung.

Die Auswertung der Analyseeinheit ermöglicht die Optimierung einzelner oder mehrerer Fahrzeugbehandlungsanlagen. Optimierungen einer Fahrzeugbehandlungsanlage können insbesondere Preisänderungen, Änderungen des Waschprogramms und/oder Änderungen der Behandlungsmittelzusammensetzung sein.

Die Auswertungen der Analyseeinheit ermöglicht Rückschlüsse auf das Nutzungsverhalten und zeigt so Schwachstellen im System auf.

Die Nutzungsdaten können die Nutzungsdaten mindestens einer Fahrzeugbehandlungsanlage und/oder Bezugsdaten, insbesondere Ort, Uhrzeit und/oder Behandlungsprogramm sein.

Die Fahrzeugidentifikationsvorrichtung und/oder die Analyseeinrichtung sind in der Lage eine Anlagen-ID der Fahrzeugbehandlungsanlage zu erzeugen und/oder zu übertragen.

Die übertragenen Nachrichten, beispielsweise die Steuerdaten-Empfehlung und/oder die Anfragenachricht können eine Anlagen-ID der Fahrzeugbehandlungsanlage enthalten. Eine Anlagen-ID einer Fahrzeugbehandlungsanlage kann die Fahrzeugbehandlungsanlage eindeutig identifizierbar, also von anderen unterscheidbar machen. Die Offenbarung ist in den Zeichnungen beispielhaft und schematisch dargestellt. Diese zeigen:
- Figur 1:: Eine Fahrzeugbehandlungsanlage mit einer Umfelderfassungsvorrichtung und einer Fahrzeugidentifikationsvorrichtung;
- Figur 2:: Schematische Darstellung der Fahrzeugidentifikationsvorrichtung

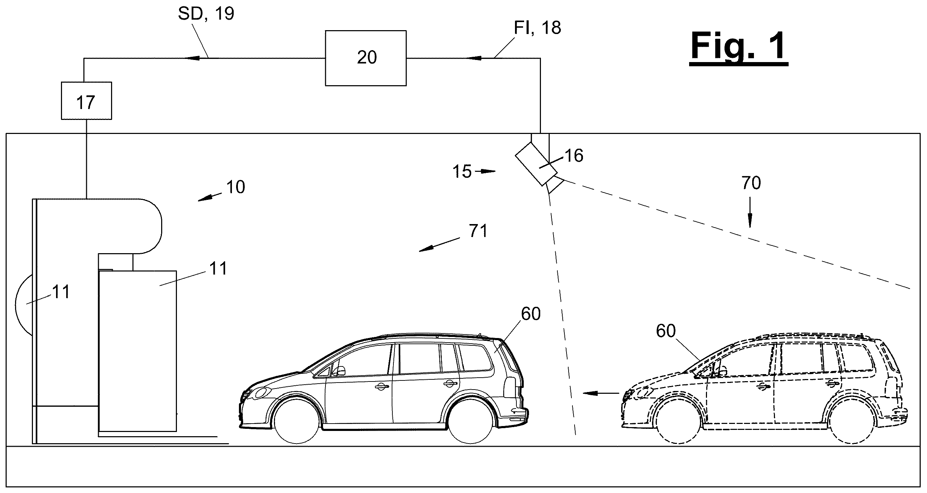

Figur 1 zeigt eine Fahrzeugbehandlungsanlage (10). In dem Beispiel ist die Fahrzeugbehandlungsanlage (10) als eine automatische Waschanlage insbesondere als Portalwaschanlage ausgeführt. Im vorliegenden Beispiel ist im Behandlungsbereich (71) der Waschanlage eine Mehrzahl von Behandlungsmitteln (11) an einem Träger angeordnet. Diese Behandlungsmittel (11) können beispielsweise Waschbürsten, Fluid-Düsen, Gebläse oder Polierbürsten sein. Alternativ oder zusätzlich können beliebige andere Ausführungsformen eines Behandlungsmittels (11) vorliegen.

Die Fahrzeugbehandlungsanlage (10) kann optional eine Bewegungsvorrichtung für mindestens ein zu behandelndes Fahrzeug (60), insbesondere eine Schleppeinrichtung aufweisen. Mit anderen Worten kann die Fahrzeugbehandlungsanlage (10) eine Waschstraße sein.

Es ist mindestens eine Umfelderfassungsvorrichtung (15) vorgesehen. Diese mindestens eine Umfelderfassungsvorrichtung (15) kann beliebig ausgestaltet sein. Sie kann insbesondere ein bildgebender Sensor sein, weiter insbesondere eine Kamera (16). Die mindestens eine Umfelderfassungsvorrichtung (15) kann insbesondere Sensordaten (SO) erfassen. In diesem Beispiel erfasst die Umfelderfassungsvorrichtung (15) das Kennzeichen des zu behandelnden Fahrzeugs (60). Alternativ oder zusätzlich können beliebige andere Merkmale erfasst werden. Beispielsweise kann alternativ auch eine Fahrgestellnummer und/oder ein ID-Code erfasst werden.

Die mindestens eine Umfelderfassungsvorrichtung (15) ist im ausgeführten Beispiel mit einem jeweiligen Erfassungsbereich ausgerichtet. Dieser Erfassungsbereich umfasst bevorzugt den Einfahrtsbereich (70) der Fahrzeugbehandlungsanlage (10). Alternativ oder zusätzlich kann er auf andere Bereiche, wie beispielsweise auf den Behandlungsbereich (71) oder das Anlagenumfeld gerichtet sein.

Die erfassten Sensordaten (SO) werden insbesondere in Fahrzeugidentifikationsdaten (FI) umgewandelt, vorzugsweise durch eine Erkennungseinheit (14). Die Erkennungseinheit (14) kann separat vorliegen oder ein Bestandteil der Umfelderfassungsvorrichtung (15) oder der Fahrzeugidentifikationsdaten (FI) sein.

Die Fahrzeugidentifikationsvorrichtung (20) ist insbesondere dazu ausgebildet Daten zu empfangen, vorzugsweise Fahrzeugidentifikationsdaten (FI). Es können alternativ oder zusätzlich beliebige andere Daten wie beispielsweise Sensordaten (SO) empfangen werden. Insbesondere also Daten welche direkt aus der Umfelderfassungsvorrichtung (15) übertragen werden, vorzugsweise aber Daten welche bereits in Fahrzeugidentifikationsdaten (FI), insbesondere durch eine Erkennungseinheit (14), umgewandelt wurden.

Fahrzeugidentifikationsdaten (FI) sind insbesondere Daten, die ein Fahrzeug (60) eindeutig identifizierbar und von allen anderen Fahrzeugen unterscheidbar machen, beispielsweise ein KFZ-Kennzeichen, eine Fahrgestellnummer und/oder ein ausgesendeter ID-Code.

In einer beispielhaften Ausführung ist eine Anlagensteuerung (17), insbesondere eine Fahrzeugbehandlungsanalagensteuerung vorgesehen, die dazu ausgebildet ist verschiedene Behandlungsverfahren auszuführen. Die Ausführung dieser Verfahren kann auf beliebige Weise in einer oder mehreren Teilen der Anlagensteuerung (17) ausgeführt werden, wobei diese Teile durch mindestens eine Schnittstelle verbunden sein können.

Die Anlagensteuerung (17) kann insbesondere Teil der Fahrzeugbehandlungsanalage sein. Sie kann alternativ oder zusätzlich beliebig anders angeordnet sein.

Die Anlagensteuerung (17) kann insbesondere als Steuerung für eine einzelne Fahrzeugbehandlungsanlage (10) ausgestaltet sein. Alternativ kann sie als eine zentrale Anlagensteuerung (17) für mehrere Fahrzeugbehandlungsanlagen (10) ausgestaltet sein.

Gemäß eines Beispiels werden Fahrzeugidentifikationsdaten (FI) insbesondere über eine (erste) Anlagenschnittstelle (18) an die Fahrzeugidentifikationsvorrichtung (20) übermittelt.

Die Fahrzeugidentifikationsvorrichtung (20) ermöglicht die Erzeugung einer Anonym-ID (ID). Diese Erzeugung erfolgt vorzugsweise durch die Vergabe einer Kennung insbesondere durch die Vergabe eines spezifischen Hash-Werts.

Bevorzugt wird die Anonym-ID (ID) durch eine Anonymisierungseinheit (23) erzeugt. Diese Anonymisierungseinheit (23) ist insbesondere Teil der Fahrzeugidentifikationsvorrichtung (20).

Die Fahrzeugidentifikationsvorrichtung (20) ist vorzugsweise dazu ausgebildet, eine momentan erzeugte Anonym-ID (ID) zu speichern.

Die Speicherung einer Anonym-ID (ID) kann vorzugsweise lokal erfolgen. Die Speicherung einer Anonym-ID (ID) kann insbesondere auch zentral erfolgen, insbesondere zentral über mehrere Fahrzeugbehandlungsanlagen (10). Alternativ oder zusätzlich kann die Speicherung einer Anonym-ID (ID) in einer entfernten Steuerung, beispielsweise in einem Server und/oder Datenverwaltungsdienst.

Dasselbe gilt für den Abruf mindestens einer vorbekannten Anonym-ID (ID) und/oder zugeordneter Nutzungsdaten.

Die Fahrzeugidentifikationsvorrichtung (20) ist beispielsweise dazu ausgebildet, eine erzeugte Anonym-ID (ID) mit Nutzungsdaten (ND) in Beziehung zu setzen, vorzugsweise zu vergleichen.

Nutzungsdaten (ND) sind im vorliegenden Beispiel vorbekannte, bereits gespeicherte Daten, vorzugsweise eine vorbekannte Anonym-ID (ID), weiter vorzugsweise Daten zu einer früheren Behandlung des Fahrzeugs (60), für das die Anonym-ID (ID) erzeugt worden ist.

Vorzugsweise wird eine erzeugte Anonym-ID (ID) mit einer anderen Anonym-ID (ID) verglichen und es werden Steuerdaten (SD) und/oder eine Steuerdaten-Empfehlung auf Basis dieses Vergleichs erzeugt.

Steuerdaten (SD) und/oder eine Steuerdaten-Empfehlung und/oder ein Analyseergebnis kann/können insbesondere als eine computerlesbare geordnete Datenstruktur ausgebildet sein.

Steuerdaten (SD) und/oder eine Steuerdaten-Empfehlung umfassen in einer bevorzugten Ausführungsform Daten zur Steuerung der Fahrzeugbehandlungsanlage (10), insbesondere Programmsteuerdaten. Programmsteuerdaten können beispielsweise zur Anpassung des Waschprogramms und/oder zur Anpassung von Parametern für eine bestimmte Dienstleistung, insbesondere zur Anpassung des Preises einer Dienstleistung vorliegen/ausgebildet sein.

Die Steuerdaten (SD) und/oder eine Steuerdaten-Empfehlung können beispielsweise über eine Schnittstelle an die Anlagensteuerung (17) übertragen werden, insbesondere über eine (zweite) Anlagenschnittstelle (19).

Die (zweite) Anlagenschnittstelle (19) ist bevorzugt dazu ausgebildet, Steuerdaten (SD) und/oder eine Steuerdaten-Empfehlung zu übertragen, bevorzugt bidirektional. In anderen Worten ist die (zweite) Anlagenschnittstelle (19) bevorzugt dazu ausgebildet, Steuerdaten (SD) und/oder eine Steuerdaten-Empfehlung in beide Richtungen zu übertragen also beispielsweise zu empfangen und/oder zu versenden.

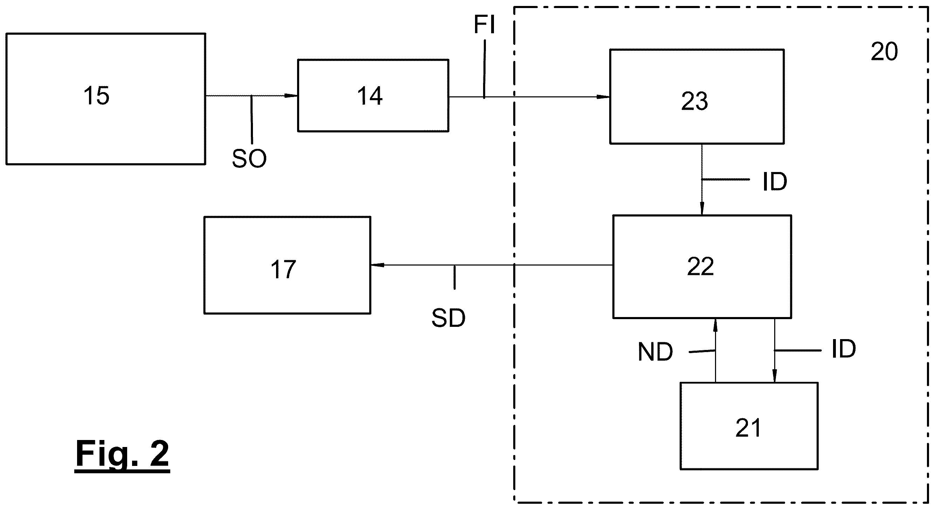

Figur 2 stellt einen schematischen Aufbau der Fahrzeugidentifikationsvorrichtung (20) dar.

Die Fahrzeugidentifikationsvorrichtung (20) umfasst beispielsweise eine Anonymisierungseinheit (23) und eine Datenverarbeitungseinheit (22) und bevorzugt eine Speichereinheit (21) und weiter bevorzugt eine Erkennungseinheit (14). Die Anordnung der Einheiten kann alternativ oder zusätzlich beliebig anders gestaltet werden.

Die Speichereinheit (21) kann als Teil der Fahrzeugidentifikationsvorrichtung (20) ausgeführt sein. Sie kann alternativ oder zusätzlich entfernt ausgebildet sein und/oder über eine Schnittstelle kommunikativ erreichbar sein.

Die Speichereinheit (21) speichert insbesondere die Daten in einer strukturierten Form ab, vorzugsweise in einer Datenbank.

Die Speichereinheit (21) kann beispielsweise als Server ausgeführt sein.

Die Speichereinheit (21) weist bevorzugt eine bidirektionale Schnittstelle zur Datenverarbeitung auf.

Zudem weist die Speichereinheit (21) im gezeigten Beispiel vorzugsweise eine Schnittstelle zur Umfelderfassungsvorrichtung (15) und/oder zur Erkennungseinheit (14) auf. Durch diese Schnittstelle können insbesondere Fahrzeugidentifikationsdaten (FI), aber in einem alternativen Beispiel auch Sensordaten (SO) empfangen werden.

Über die Schnittstelle zwischen der Datenverarbeitungseinheit (22) und/oder der Anonymisierungseinheit (23) können Nutzungsdaten (ND), insbesondere eine bereits vorbekannte Anonym-ID (ID) übertragen werden.

Die Anonymisierungseinheit (23) ist vorzugsweise dazu ausgebildet aus empfangenen Fahrzeugidentifikationsdaten (FI) eine Anonym-ID (ID) zu erzeugen.

Die von der Anonymisierungseinheit (23) erzeugten Fahrzeugidentifikationsdaten (FI) können vorzugsweise über eine Schnittstelle an die Datenverarbeitungseinheit (22) übertragen werden.

Im vorliegenden Beispiel ist die Datenverarbeitungseinheit (22) dazu ausgebildet anonymisierte Daten, vorzugsweise eine Anonym-ID (ID) von beispielswiese einer Anonymisierungseinheit (23) zu empfangen.

Im vorliegenden Beispiel ist die Datenverarbeitungseinheit (22) dazu ausgebildet Steuerdaten (SD) und/oder eine Steuerdaten-Empfehlung aus dem Abgleich mit Nutzungsdaten (ND), beispielsweise dem Abgleich mit einer vorbekannten Anonym-ID (ID), zu erzeugen.

Im vorliegenden Beispiel ist die Datenverarbeitungseinheit (22) dazu ausgebildet Steuerdaten (SD) und/oder eine Steuerdaten-Empfehlung an die Anlagensteuerung (17) zu übertragen.

Die Anordnung der Komponenten und/oder Schnittstellen im vorliegenden Beispiel kann beliebig abgewandelt werden. Jede der Einheiten kann sowohl innerhalb der Fahrzeugidentifizierungsvorrichtung (20) und/oder innerhalb der Fahrzeugbehandlungsanlage (10) angeordnet sein, als auch außerhalb.

Alle Bestandteile und Funktionen der Fahrzeugidentifikationsvorrichtung (20) können Arbeitsteile und/oder Schritte des Fahrzeugidentifikationsverfahrens sein und umgekehrt.

### Bezugszeichenliste

- 10: Fahrzeugbehandlungsanlage
- 11: Behandlungsmittel
- 14: Erkennungseinheit
- 15: Umfelderfassungsvorrichtung
- 16: Kamera
- 17: Anlagensteuerung
- 18: Erste Anlagenschnittstelle
- 19: Zweite Anlagenschnittstelle
- 20: Fahrzeugidentifikationsvorrichtung
- 21: Speichereinheit
- 22: Datenverarbeitungseinheit
- 23: Anonymisierungseinheit
- 60: Fahrzeug
- 70: Einfahrtsbereich
- 71: Behandlungsbereich
- SO: Sensordaten
- FI: Fahrzeugidentifikationsdaten
- ID: Anonym-ID
- SD: Steuerdaten
- ND: Nutzungsdaten

## Patentansprüche

1. Fahrzeugidentifikationsvorrichtung zur Erkennung eines Fahrzeugs (60) in einer Fahrzeugbehandlungsanlage (10), insbesondere in einer Fahrzeugwaschanlage, wobei die Fahrzeugidentifikationsvorrichtung (20) dazu ausgebildet ist, Fahrzeugidentifikationsdaten (FI) von einer Umfelderfassungsvorrichtung (15) der Fahrzeugbehandlungsanlage (10) zu beziehen und wobei die Fahrzeugidentifikationsvorrichtung (20) weiter dazu ausgebildet ist, die bezogenen Fahrzeugidentifikationsdaten (FI) zu anonymisieren und als Anonym-ID (ID) zu speichern und/oder auszugeben.

2. Fahrzeugidentifikationsvorrichtung nach Anspruch 1, wobei die Fahrzeugidentifikationsvorrichtung (20) dazu ausgebildet ist Steuerdaten (SD) und/oder Steuerdaten-Empfehlungen an eine Anlagensteuerung (17) auszugeben und/oder die Fahrzeugidentifikationsvorrichtung (20) dazu ausgebildet ist, die Anonym-ID (ID) mit zugeordneten Nutzungsdaten (ND) zu speichern und/oder auszugeben, insbesondere als eine Nutzungsreport-Nachricht an eine (bevorzugt externe) Analyseeinrichtung zu versenden.

3. Fahrzeugidentifikationsvorrichtung nach einem der vorherigen Ansprüche, wobei die Fahrzeugidentifikationsvorrichtung (20) eine (erste) Anlagenschnittstelle (18) aufweist, welche dazu ausgebildet ist, Fahrzeugidentifikationsdaten (FI) zu beziehen und/oder wobei die Fahrzeugidentifikationsdaten (FI) insbesondere durch eine Umwandlung von Sensordaten (SO) in Fahrzeugidentifikationsdaten (FI), vorzugsweise durch eine Erkennungseinheit (14), erzeugt sind.

4. Fahrzeugidentifikationsvorrichtung nach einem der vorherigen Ansprüche, wobei die Fahrzeugidentifikationsvorrichtung (20) die Anonym-ID (ID) speichert, insbesondere mindestens eine Speichereinheit (21) zum Speichern der Anonym-ID (ID) aufweist.

5. Fahrzeugidentifikationsvorrichtung nach einem der vorherigen Ansprüche, wobei die Fahrzeugidentifikationsvorrichtung (20) eine (zweite) Anlagenschnittstelle (19) aufweist, welche dazu ausgebildet ist, eine Steuerdaten-Empfehlung zu beziehen und/oder Steuerdaten (SD) auszugeben und/oder zu beziehen, wobei die Steuerdaten (SD) und/oder die Steuerdaten-Empfehlungen insbesondere der Anonym-ID (ID) zugeordnet und/oder in Abhängigkeit von der Anonym-ID (ID) erzeugt sind, weiter, insbesondere individuell erzeugt sind.

6. Fahrzeugidentifikationsvorrichtung nach einem der vorherigen Ansprüche, wobei die Fahrzeugidentifikationsvorrichtung (20) auf Basis der Anonym-ID (ID) eine Anfragenachricht mit der Anonym-ID (ID) an eine Analyseeinrichtung versendet, und insbesondere in Antwort auf die Anfragenachricht eine Empfehlungsnachricht oder eine Analyseergebnis-Nachricht empfängt und/oder wobei die Empfehlungsnachricht eine Steuerdaten-Empfehlung umfasst, insbesondere in Bezug auf eine zuvor mit einer Anfragenachricht versendete Anonym-ID (ID), und wobei die Fahrzeugidentifikationsvorrichtung (20) insbesondere Steuerdaten (SD) auf Basis der Steuerdaten-Empfehlung ausgibt und/oder eine Analyseergebnis-Nachricht ein Analyseergebnis umfasst, welches ein Nutzungsverhalten in Bezug auf eine zuvor mit einer Anfragenachricht versendete Anonym-ID kennzeichnet, und wobei die Fahrzeugidentifikationsvorrichtung (20) insbesondere Steuerdaten (SD) auf Basis des Analyseergebnisses ausgibt und/oder eine Steuerdaten-Empfehlung und/oder die Steuerdaten (SD) individuelle Konfigurationen der Fahrzeugbehandlungsanlage (10) umfassen, insbesondere Daten zu bestimmten Waschprogrammen und/oder Rabattaktionen.

7. Fahrzeugidentifikationsvorrichtung, nach einem der vorherigen Ansprüche, wobei die Fahrzeugidentifikationsdaten (FI) ein Fahrzeug (60) eindeutig identifizierbar und von allen anderen Fahrzeugen unterscheidbar machen und insbesondere als KFZ-Kennzeichen, Fahrgestellnummer und/oder ein ausgesendeter ID-Code ausgebildet sind und/oder die Erzeugung der Anonym-ID (ID) durch Erzeugung eines Hash-Werts erfolgt oder die Erzeugung eines Hash-Werts umfasst und/oder wobei ein Abgleich einer neu/momentan erzeugten Anonym-ID (ID) mit Nutzungsdaten, insbesondere mindestens einer bereits gespeicherten Anonym-ID (ID) erfolgt, insbesondere mit einer gespeicherten Menge an vorbekannten Anonym-IDs (ID) und/oder die Fahrzeugidentifikationsvorrichtung (20) dazu ausgebildet ist, eine Anonym-ID (ID) mit historischen Nutzungsdaten in Beziehung zu setzen, insbesondere mit Nutzungsdaten zu einer oder mehreren vorbekannten Anonym-IDs (ID).

8. Fahrzeugidentifikationsvorrichtung nach einem der vorherigen Ansprüche, wobei die Steuerdaten (SD) und/oder eine Steuerdatenempfehlung auf Basis eines Abgleichs einer neu/momentan erzeugten Anonym-ID (ID) mit historischen Nutzungsdaten (ND), insbesondere zu mindestens einer vorbekannten Anonym-ID (ID), erzeugt werden und/oder eine Anfragenachricht und/oder die Steuerdaten (SD) und/oder die Steuerdaten-Empfehlung fahrzeugindividuell ausgegeben wird.

9. Fahrzeugidentifikationsvorrichtung nach einem der vorherigen Ansprüche, wobei die Fahrzeugidentifikationsvorrichtung (20) Fahrzeugidentifikationsdaten (FI) bezieht.

10. Fahrzeugbehandlungsanlage, insbesondere Fahrzeugwaschanlage, umfassend eine Anlagensteuerung (17), eine Fahrzeugidentifikationsvorrichtung (20) nach einem der vorherigen Ansprüche und eine Umfelderfassungsvorrichtung (15).

11. Softwareprodukt, insbesondere gespeichert auf einem Datenträger und/oder kommuniziert über eine Datenschnittstelle, wobei das Softwareprodukt Anweisungen umfasst, die dazu ausgebildet sind, eine Datenverarbeitungseinrichtung dazu zu veranlassen, ein Fahrzeugidentifikationsverfahren mit den folgenden Schritten auszuführen:
- Beziehen von Fahrzeugidentifikationsdaten (FI) und
- anonymisieren der bezogenen Fahrzeugidentifikationsdaten (FI) durch Erzeugung einer Anonym-ID (ID) und
- speichern der Anonym-ID (ID) und
- ausgeben von Steuerdaten (SD) an die Anlagensteuerung (17) und/oder versenden einer Nutzungsreport-Nachricht mit der Anonym-ID (ID) und/oder Versenden einer Anfragenachricht mit der Anonym-ID (ID).

12. Analyseeinrichtung zur Analyse des Nutzungsverhaltens an mindestens einer Fahrzeugbehandlungsanlage (10), wobei die Analyseeinrichtung eine Datenverarbeitungseinrichtung umfasst und dazu ausgebildet ist,
- mindestens eine Nutzungsreport-Nachricht mit einer Anonym-ID (ID) und mit Nutzungsdaten (ND), insbesondere mit der Anonym-ID (ID) zugeordneten Nutzungsdaten (ND) zu empfangen;
- die empfangenen Nutzungsdaten (ND) mit historischen Nutzungsdaten (ND) in Beziehung zu setzen, insbesondere mit historischen Nutzungsdaten (ND), die einer vorbekannten Anonym-ID (ID) zugeordnet sind, weiter insbesondere mit Nutzungsdaten (ND), die derselben vorbekannten Anonym-ID (ID) zugeordnet sind;
- auf Basis einer Auswertung der Nutzungsdaten (ND) ein Analyseergebnis über ein fahrzeugindividuelles Nutzungsverhalten auszugeben, insbesondere in Bezug auf mindestens eine Anonym-ID (ID).

13. Analyseeinrichtung nach dem vorhergehenden Anspruch, wobei die Analyseeinrichtung dazu ausgebildet ist:
- eine Anfragenachricht mit einer Anonym-ID (ID) zu empfangen;
- eine Steuerdaten-Empfehlung bereitzustellen auf Basis der empfangenen Anonym-ID (ID) und historischer Nutzungsdaten (ND), die insbesondere mindestens einer vorbekannten Anonym-ID (ID) zugeordnet sind, weiter insbesondere auf Basis historischer Nutzungsdaten (ND), die derselben vorbekannten Anonym-ID (ID) zugeordnet sind;
- eine Empfehlungsnachricht in Antwort auf die Anfragenachricht zu versenden, wobei die Empfehlungsnachricht die Steuerdaten-Empfehlung umfasst
und/ oder wobei die Analyseeinrichtung Nutzungsdaten (ND) und/ oder Anonym-IDs (ID) verschiedener Standorte bezieht und/oder auswertet, insbesondere Nutzungsdaten (ND) und/ oder Anonym-IDs (ID) verschiedener Standorte für die Ermittlung eines Analyseergebnisses zueinander in Beziehung setzt.

14. Softwareprodukt, insbesondere gespeichert auf einem Datenträger und/oder kommuniziert über eine Datenschnittstelle, wobei das Softwareprodukt Anweisungen enthält, die eine Datenverarbeitungseinrichtung dazu veranlassen Analysedaten, insbesondere Nutzungsdaten (ND) und erzeugte Anonym-IDs (ID) einer Fahrzeugbehandlungsanlage durch ein Analyseverfahren auszuwerten und auf Basis des Analyseverfahrens Optimierungen für eine Fahrzeugbehandlungsanlage (10) vorzuschlagen und/oder umzusetzen.

15. Fahrzeugidentifikationsverfahren welches die folgenden Schritten umfasst:
- beziehen von Fahrzeugidentifikationsdaten (FI) von einer Umfelderfassungsvorrichtung (15) und
- anonymisieren der bezogenen Fahrzeugidentifikationsdaten (FI) durch Erzeugung einer Anonym-ID (ID) und
- bevorzugt speichern der Anonym-ID (ID) und
- ausgeben von Steuerdaten (SD) an die Anlagensteuerung (17) in Abhängigkeit von der Anonym-ID (ID) und
- optional versenden einer Anfragenachricht mit der Anonym-ID (ID), insbesondere an eine (externe / entfernte) Analyseeinrichtung und
- optional empfangen einer Empfehlungsnachricht und/oder Empfangen einer Analyseergebnis-Nachricht, wobei die Steuerdaten (SD) insbesondere auf Basis der empfangenen Empfehlungsnachricht und/oder Analyseergebnis-Nachricht erzeugt und/oder ausgegeben werden und
- optional versenden einer Nutzungsreport-Nachricht.
